# EUROPEAN PATENT APPLICATION

(11) **EP 4 572 282 A1**
(43) Date of publication of application: **18.06.2025**
(21) Application number: 24218785.4
(22) Date of filing: 10.12.2024
(51) Int. Cl.: H04L 43/08, H04L 41/0823

(54) **HEALTH CHECK FOR NETWORK FUNCTIONS**

(30) Priority: 12.12.2023 US 202318536857
(71) Applicant: Oracle International Corporation, Redwood City, CA 94065 (US)
(72) Inventor: Krishan, Rajiv, Redwood City, CA 94065 (US)
(74) Representative: D Young & Co LLP

(57) **Abstract**

Various embodiments of the present technology generally relate to systems and methods for performing health checks on network functions. In certain embodiments, a network function (NF) health monitoring system may comprise one or more processors, and a memory having stored thereon instructions. The instructions, upon execution, may cause the one or more processors to obtain health check details for a producer NF, the health check details including a health check endpoint configured to receive health check probes, send a health check probe to the health check endpoint requesting a health status of the producer NF, update the health status of the producer NF in a locally stored list of producer NFs based on a response to the health check probe, and select a target producer NF to send traffic to based on the health status of the locally stored list of producer NFs.

## Description

### TECHNICAL FIELD

Various embodiments of the present technology generally relate to optimizing communication network performance. More specifically, embodiments of the present technology relate to systems and methods for performing health checks at network functions.

### BACKGROUND

Within a communications network, such a 5G communications network implementing 3GPP (3rd Generation Partnership Project) communication standards, network nodes exchange traffic to implement the network functionality. Network nodes within a 5GC (5G core) network may take the form of network functions (NFs), service communications proxies (SCPs), security edge protection proxies (SEPPs), or other nodes, generally referred to as NFs. Producer NFs (PNFs) may provide a service for consumer NFs (CNFs).

Under 3GPP standards, a consumer NF may select a producer NF to which to route a service request. However, a selected PNF may be under a heavy traffic or work load that may delay or prevent a timely service response. Similarly, a connection between a CNF and its selected PNF may be down or unreliable, which can also prevent a successful service request.

3GPP provides for mechanisms by which an NF can provide health information regarding its status, such as OCI (overload control information) or LCI (load control information). As used herein, health information or data may include information relating to a network function's ability to respond to service requests. Health information may include work or traffic load levels at an NF, overload status, network connectivity information, packet loss data, or other indications of an NF's ability to service requests or respond to traffic, as well as related data such as "wait periods" or "overload control period of validity" that may indicate how long a producer NF is presumed to be overloaded. OCI or LCI information may be provided from a producer NF to a consumer NF as part of the service request and response process. However, this health information "bootstrapping" requires that the CNF has already established a communications connection with the PNF; e.g., a TCP (transmission control protocol) connection, and used it to send a service request. This arrangement does not enable a CNF to determine whether a PNF is overloaded or "unhealthy" without establishing a connection first and sending a service request, which is inefficient. In some 3GPP network models, NFs may register a profile with a network repository function (NRF), and may provide the NRF with NF or service load updates. Other NFs may then obtain profile information and associated health information for PNFs from the NRF. However, the information from the NRF may be inaccurate or out of date. For example, the connection between a PNF and the NRF may be strong, but the connection between a CNF and that same PNF may be down. Thus connection, routing, and service ability with a given PNF is not available or known to a CNF until it sends first service request. Similarly, as an NF may only update an NRF on its health information periodically, by the time the health information is provided to the NRF, stored, and provided to a CNF, the information may be outdated. Accordingly, there exists a need for improved health check mechanisms for NFs within a network.

The information provided in this section is presented as background information and serves only to assist in any understanding of the present disclosure. No determination has been made and no assertion is made as to whether any of the above might be applicable as prior art with regard to the present disclosure.

### BRIEF SUMMARY OF THE INVENTION

This Summary is provided to introduce a selection of concepts in a simplified form that are further described below in the Detailed Description. This Summary is not intended to identify key features or essential features of the claimed subject matter, nor is it intended to be used as an aid in determining the scope of the claimed subject matter.

Various embodiments herein relate to systems, methods, and computer-readable storage media for performing health checks for network functions. In an embodiment, a network function (NF) health monitoring system may comprise one or more processors, and a memory having stored thereon instructions. The instructions, upon execution, may cause the one or more processors to obtain health check details for a producer NF, the health check details including a health check endpoint configured to receive health check probes, send a health check probe to the health check endpoint requesting a health status of the producer NF, update the health status of the producer NF in a locally stored list of producer NFs based on a response to the health check probe, and select a target producer NF to send traffic to based on the health status of the locally stored list of producer NFs.

In some embodiments, the NF health monitoring system may request NF profile data for the producer NF from a network repository function (NRF), and obtain the health check details from the NF profile data. In some examples, the health check details may be included as vendor specific attributes added to the NF profile data. The health check details may be included in an NFService section of the NF profile for a service-specific health check endpoint. In some examples, the health status may include a load level of the producer NF. The NF health monitoring system may send the health check probe at a selected timing interval. In some examples, the health check details may include a recommended health check interval for a timing delay between health check probes sent to the health check endpoint, and the NF health check monitoring system may adjust the selected timing interval based on the recommended health check interval. In certain examples, the NF health monitoring system may determine whether active signaling traffic is being exchanged with the producer NF, via which the health status of the producer NF is piggybacked onto the active signaling traffic, and the NF health monitoring system may suspend the health check probe to the producer NF when the active signaling traffic is being exchanged. In some embodiments, the NF health monitoring system may receive overload control information (OCI) as part of the health status of the producer NF, the OCI including an indication the producer NF is overloaded, and an overload control period of validity during which the producer NF is presumed to be overloaded. The NF health monitoring system may suspend the health check probe to the producer NF based on the overload control period of validity. According to some examples, the NF health monitoring system may create a new NF profile, at the NRF, for a consumer NF implementing the NF health monitoring system, the new NF profile including a new health check endpoint for the consumer NF.

In an alternative embodiment, a method may comprise operating network function (NF) health monitoring system, including obtaining health check details for a producer NF, the health check details including a health check endpoint configured to receive health check probes, sending a health check probe to the health check endpoint requesting a health status of the producer NF, updating the health status of the producer NF in a locally stored list of producer NFs based on a response to the health check probe, and selecting a target producer NF to send traffic to based on the health status of the locally stored list of producer NFs.

### BRIEF DESCRIPTION OF THE DRAWINGS

Many aspects of the disclosure can be better understood with reference to the following drawings. The components in the drawings are not necessarily drawn to scale. Moreover, in the drawings, like reference numerals designate corresponding parts throughout the several views. While several embodiments are described in connection with these drawings, the disclosure is not limited to the embodiments disclosed herein.
FIG. 1 is a diagram of a system configured to implement health checks for network functions, in accordance with certain embodiments of the present disclosure;
FIG. 2 is a diagram of a system configured to implement health checks for network functions, in accordance with certain embodiments of the present disclosure;
FIG. 3 depicts a flow diagram of an example method to implement health checks for network functions, in accordance with certain embodiments of the present disclosure;
FIG. 4 depicts a set of profile tables for health checks for network functions, in accordance with certain embodiments of the present disclosure;
FIG. 5 depicts a flow diagram of an example method to implement health checks for network functions, in accordance with certain embodiments of the present disclosure;
FIG. 6 depicts a flowchart of an example method to implement health checks for network functions, in accordance with certain embodiments of the present disclosure; and
FIG. 7 is a diagram of a system configured to implement health checks for network functions, in accordance with certain embodiments of the present disclosure.

Some components or operations may be separated into different blocks or combined into a single block for the purposes of discussion of some of the embodiments of the present technology. Moreover, while the technology is amenable to various modifications and alternative forms, specific embodiments have been shown by way of example in the drawings and are described in detail below. The intention, however, is not to limit the technology to the particular embodiments described. On the contrary, the technology is intended to cover all modifications, equivalents, and alternatives falling within the scope of the technology as defined by the appended claims.

### DETAILED DESCRIPTION

In the following detailed description of certain embodiments, reference is made to the accompanying drawings which form a part hereof, and in which are shown by way of illustration of example embodiments. It is also to be understood that features of the embodiments and examples herein can be combined, exchanged, or removed, other embodiments may be utilized or created, and structural changes may be made without departing from the scope of the present disclosure. The following description and associated figures teach the best mode of the invention. For the purpose of teaching inventive principles, some aspects of the best mode may be simplified or omitted.

In accordance with various embodiments, the methods and functions described herein may be implemented as one or more software programs running on a computer processor or controller. Dedicated hardware implementations including, but not limited to, application specific integrated circuits, programmable logic arrays, and other hardware devices can likewise be constructed to implement the methods and functions described herein. Methods and functions may be performed by modules or nodes, which may include one or more physical components of a computing device (e.g., logic, circuits, processors, etc.) configured to perform a particular task or job, or may include instructions that, when executed, can cause a processor to perform a particular task or job, or any combination thereof. Further, the methods described herein may be implemented as a computer readable storage medium or memory device including instructions that, when executed, cause a processor to perform the methods.

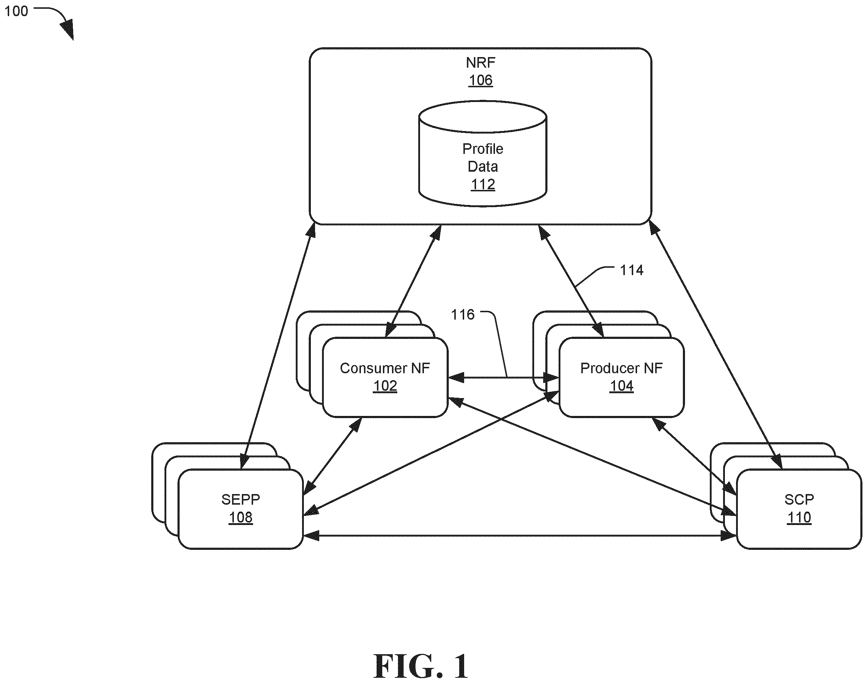

FIG. 1 is a diagram of a system 100 configured to implement health checks for network functions, in accordance with certain embodiments of the present disclosure. The example system 100 may include a network comprising a 5G core (5GC) cellular network implementing 3GPP (3rd Generation Partnership Project) communication standards, although the present disclosure may apply to other communication networks.

Each or any of the components and sub-components of the 5GC network may be implemented via computers, servers, hardware and software modules, or other system components. The components of 5GC network and its subcomponents, or the physical devices implementing them, may be co-located, remotely distributed, or any combination thereof. The elements of system 100 may include components hosted or situated in the cloud, and implemented as software modules potentially distributed across one or more server devices or other physical components, such as by using Kubernetes pods.

The system 100 may include a plurality of example components, nodes, or network functions (NFs), including consumer NF 102, producer NF 104, Network Repository Function or NF Repository Function (NRF) 106, Security Edge Protection Proxy (SEPP) 108, or Service Controller Proxy or Service Communications Proxy (SCP) 110, all of which may be broadly referred to as NFs. The selection of NFs 102-110 depicted in system 100 is exemplary, and some of the NFs 102-110 may be excluded, or other NFs added to the collection, without departing from the scope of this disclosure. The various NFS 102-110 may execute various operations to provide communication services to user equipment (UE) that connects to the 5GC network of system 100.

A network node or NF that provides service may be referred to as a producer NF, while a network node or NF that consumes service may be referred to as a consumer NF. A network function can be both a producer NF and a consumer NF depending on whether it is consuming or providing service in a given exchange. So for example, NRF 106 may operate as a producer NF and SCP 110 may operate as a consumer NF in an exchange where NRF is providing details on NF profiles to SCP 110. Generic consumer NFs 102 and producer NFs 104 are depicted in system 100 in addition to specific example NFs (which may act as consumers or producers) such as NRF 106, SEPP 108, and SCP 110.

NRF 106 may maintain an NF profile data set 112 or database of available NF instances and their supported services. Consumer NFs 102 can subscribe to NRF 106 receive information about producer NF 104 instances that have registered with the NRF. For example, if a consumer NF 102 is configured to require Service A, it may subscribe to NRF 106 to be notified of producer NFs 104 that are available to provide Service A. NRF 106 may periodically send out notifications to the subscribed consumer NF 102 based on producer NFs 104 for Service A that are newly registered or are no longer available, as an example. The profile data 112 may include NF profiles for registered NFs, which may include service profiles for services the NF offers, as well as health details such as load information in NFProfile or respective NFService profiles.

SEPP 108 may be used to protect control plane traffic that is exchanged between different 5G PLMNs (Public Land Mobile Networks). As such, the SEPP performs message filtering, policing and topology hiding for all API messages. Service requests from other networks may pass through SEPP 108 to reach producer NFs 104 in the home network of system 100.

SCP 110 may act as routing agents within a network of system 100. SCP 110 may subscribe with the NRF 106 and obtains reachability and service profile information regarding producer NF 104 service instances. Consumer NFs 102 may connect to the SCP 110, and the SCP may load balance traffic among producer NF 104 service instances that provide the required service, or may directly route the traffic to a specified producer NF 104.

3GPP may provide a number of different implementation models for 5G networks, such as models A, B, C, and D, and each of the proposed models may have limitations with regard to consumer NFs/SCP/SEPPs obtaining health information for target producer NFs 104.

Model A may include no NRF 106, and therefore NFs may be unable to register a profile, or subscribe to the NRF 106 to receive profile or health information (e.g., Nfload or Service load information). As there may be no load information available from an NRF 106, consumer NFs 102 may need to establish a connection to a target producer NF 104 without any information on its current load level or connection health. Once a connection is established and a first service request is sent, OCI or LCI information may be "piggybacked" by producer NF 104 onto service request responses. Similarly, changes to load or health information can only be determined after the fact, in response to service request traffic.

Model B may include NRF 106, but may not include SCP 110 for traffic routing and balancing. Model C may include NRF 106 and SCP 110 for routing, while model D may enable SCP 110 to perform delegated discovery-based routing. In all of models B-D, consumer NFs can subscribe for profile change information with the NRF 106, including for load data; e.g., change in Nfload reporting through notification. However, receiving profile updates from NRF 106 does not guarantee availability of a routing path between consumer NF 102 and a producer NF 104. For example, it is possible that a network path 114 between producer NF 104 and NRF 106 is healthy, but a network path 116 between consumer NF 102 and producer NF 104 (or similarly, a path routed through SCP 110 or SEPP 108 to a producer) is impaired. Also, load reporting from NRF 106 to consumer NFs 102 may be a delayed notification, based on a producer NF 104 reporting to NRF 106, and then NRF reporting out to subscribed consumer NFs. Further, OCI information can be exchanged by producer NF 104 only through a service request response procedure. Thus, if there are infrequent service requests between a consumer NF 102 and producer NF 104, the consumer NF may not be able to determine a current overload condition of the producer NF. For example, OCI information reported from a producer NF 104 to consumer NF 102 may indicate that the producer is in an overload condition, and may include an "overload control period of validity" indicating how long the producer is presumed to be in the overload condition. This period of validity may be a default duration intended to reduce traffic to the overloaded NF, and may not reflect an actual overload duration. If a consumer NF 102 receives an overload report from producer NF 104 with the overload period of validity, the consumer may exclude the producer from service requests for the period of validity, after which the consumer may consider the overload abated. However, the producer NF 104 may still be in the overload status, and therefore the potential for service request failure remains.

Accordingly, a means by which a node can fetch health information, such as connectivity and OCI and LCI information, from a next node proactively would be advantageous to the functioning of a communications network. Such a system would avoid routing delays during processing of a service request. The health check may be performed by a "hop before" entity to a "next hop" entity, referring to a direct next entity to be accessed. For example, if consumer NF 102 was to directly access producer NF 104, then the consumer NF may be the "hop before" and the producer NF may be the "next hop". However, if consumer NF 102 was going to access producer NF 104 via SCP 110, then consumer NF 104 would be the hop before, and the SCP would be the next hop. The SCP 110 may then access health information of the producer NF 104, in which case the SCP would be the hop before, and the producer NF would be the next hop.

According to the proposed solution, an NF, such as a producer NF, SCP, or SEPP, may expose an endpoint, such as a port or access address, for servicing health check inquiries. One or more health check endpoints may be exposed via entries in an NF profile for the NF in question, such as in profile data 112 at NRF 106. In Model A configurations in which there is no NRF, NFProfile data (e.g., for producer NF 104) may be loaded manually or automatically by a network operator onto other NFs that may utilize the corresponding services (e.g., consumer NF 102 or SCP 110), for example during an NF's initialization. An optional custom parameter in the NF profile may identify the endpoint. On receiving a health check request at the endpoint, the producer NF 104 shall provide OCI or LCI information related to the NF, such as for the NF-Instance or NF-Set. Instead of or in addition to a general endpoint in the NF profile, an NF may include an optional custom parameter in the service profile portion of the NF profile. On call to the service endpoint, the producer NF 104 shall provide OCI or LCI information related to the service endpoint, e.g., for an NF-Service-Instance or NF-Service-Set.

An NF, such as a consumer NF, SCP, or SEPP, can learn about the additional endpoint information from a producer NFs 104 NF profile. Regardless of whether the producer NF 104 instance is active in routing, a hop before entity (e.g., a consumer NF 102, SCP 110, or SEPP 108) can use the producer's endpoint to proactively trigger a health-check API, The health check can enable a hop before entity to determine the network routing status with the target producer NF 104, and fetch OCI or LCI information without relying on piggybacking on request and response messages in an open communication session.

As indicated above, the health check probing may be limited to an immediate next hop entity. Consumer NF 102 may not perform direct probing with producer NFs 104 that are not expected to be communicated with directly. For example, if a consumer NF 102 is expected to communicate through SCPs 110 in its locality, then it shall probe the SCPs' heath-check only. By limiting health checks to an immediate next hop, it may reduce network congestion, and the health responses may accurately reflect the conditions of communication paths that would actually be taken during communication sessions.

The health check probing may be performed proactively by consumer NFs 102 with producer NFs 104, SCPs 110, or SEPPs 108 before service requests are exchanged, and may thus determine their health status without relying on piggybacking. Similarly, the health check information can be determined directly by an entity, rather than receiving indirect health notifications via an NRF, which may be outdated and may not reflect the network conditions between the hop before and the next hop entity.

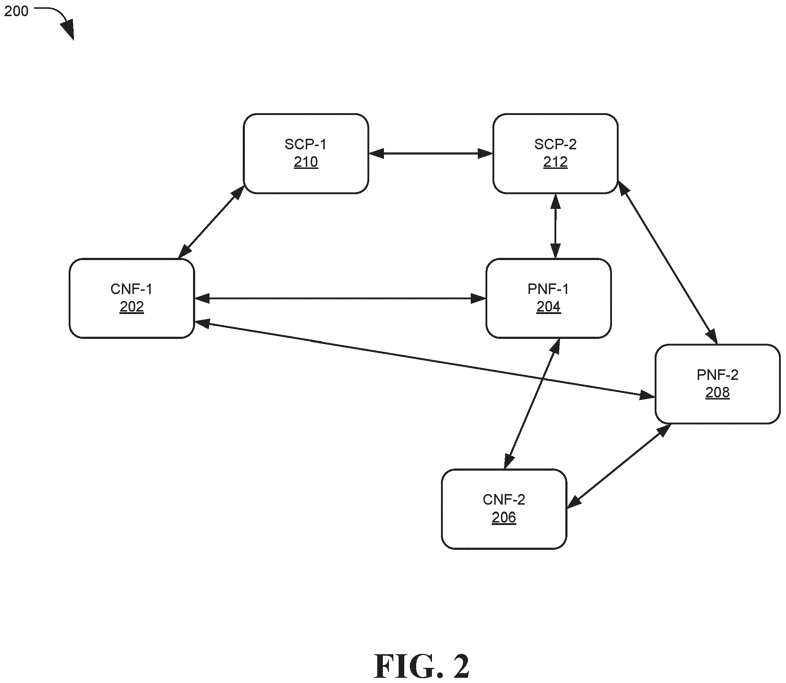

Additionally, if a producer NF/SCP/SEPP has reported OCI, indicating an overload status and providing an "overload control period of validity" during which the overload status is presumed to continue, a consumer NF/SCP/SEPP can probe health-check on or before the period of validity ends. This may allow a consumer NF 102 to proactively refresh an overload state of a producer NF 104, before assuming a normal routing state with corresponding producer NF/SCP/SEPP. For example, the overload state may end before the "period of validity" expires, and determining this from an early health check probe may enable earlier resumed communications. Alternately, the overload state may continue past the period of validity, and performing a health check probe can prevent assuming the overload has ended and attempting and failing to initiate communications. FIG. 2 provides additional details on message routing in a system configured to perform health checks for network functions.

FIG. 2 is a diagram of a system 200 configured to implement health checks for network functions, in accordance with certain embodiments of the present disclosure. In particular, diagram 200 depicts a plurality of components in an example communication network, and how traffic routing may be performed between components. The network components may include a first CNF (CNF-1) 202, a first PNF (PNF-1) 204, a second CNF (CNF-2) 206, a second PNF (PNF-2) 208, a first SCP (SCP-1) 210, and a second SCP (SCP-2) 212. The components in diagram 200 may correspond to elements described in regard to FIG. 1. The arrangement of components is exemplary to support the discussion of different component arrangements, and may not accurately reflect how components may be organized within a given network.

Components in a communication network, such as NFs, may maintain their own database or list of other components they may directly communicate with, such as "next hop" options. In some examples, consumer NFs may have primary or preferred producer NFs to connect to, and secondary or backup NFs that may be used in instances where the primary is unavailable or under heavy load. Primary and backup options may be based on factors such as locality or proximity, load capacity, network provider, or other factors, and therefore which producer NFs are primary or backup may differ between consumer NFs. For example, CNF-1 202 may have PNF-1 204 as its preferred producer, and PNF-2 208 as its backup producer. Meanwhile, CNF-2 206 may have PNF-2 208 as its preferred producer, and PNF-1 204 as its backup producer.

As noted, NFs may maintain a list of "next hop" components with which it may communicate directly. For example, a consumer NF may be notified of producer NFs that it may be configured to access by querying or subscribing to an NRF, as discussed in regard to FIG. 1. The list may include routing, addressing, or other information a consumer may use to access a producer. The list may also store health information for each producer, such as a most recently received load level, an overload validity period, or a recommended interval for probing a producer for health information listed in the producer's NF profile. Health information may be obtained by performing health probes to a producer's health check endpoint at selected intervals, from information piggybacked on request and response messages, or potentially obtained from an NRF. Using the load or other health information, a consumer NF may select which producer to access for a requested service.

For example, CNF-2 206 may maintain a list of information on PNF-1 204 and PNF-2 208, as potential next hop producer options. The preferred producer for CNF-2 206 may be PNF-2 208, with which it may have an open TCP connection and may be exchanging traffic. CNF-2 206 may receive OCI or LCI information piggybacked on its traffic, and may update its list for PNF-2 208 based on the received health information. The backup producer for CNF-2 206 may be PNF-1, with which CNF-2 is not actively exchanging traffic. Because it is not actively exchanging traffic with PNF-1 204, CNF-2 206 may instead send a health check probe at selected intervals to the health check endpoint of PNF-1 204. CNF-2 206 may update the health information for PNF-1 204 in its list based on the probe responses. If PNF-2 208 is indicating a high load level to CNF-2 206, CNF-2 may evaluate the load levels of alternate producers in its list, such as PNF-1 204. If PNF-1 204 has a significantly lower load level than PNF-2 208, CNF-2 206 may opt to perform service request processing with PNF-1 rather than using PNF-2. However, if the load levels are similar, CNF-2 206 may continue to use PNF-2 208. Similarly, if a producer with which a consumer is exchanging traffic goes down, a consumer NF may evaluate all its alternative options to select the best backup choice, based on recent health data and network connection information specific to that consumer.

In another example, CNF-1 202 may designate PNF-1 204 as the ultimate target destination of a service request. However, the request may ordinarily be sent via SCP-1 210 and SCP-2 212 in order to reach PNF-1 204. CNF-1 202 may have SCP-1 210 as a "next hop" entity in its list, and may have determined its load levels or other health attributes based on piggybacked OCI or LCI information from traffic exchanged with or passed through SCP-1 210. CNF-1 202 may issue a service request with PNF-1 204 identified as the ultimate target, and send the request to SCP-1 210. SCP-1 210 may maintain a list of next hop entities, which may include CNF-1 202 and SCP-2 212. SCP-1 210 may determine whether SCP-2 212 is available for routing of the service request based on health information SCP-1 210 has obtained from SCP-2 212. If SCP-2 212 is not available or has high load, SCP-1 210 may select an alternate SCP from its next hop list (not shown) by which to route the message. In this example, the service request is forwarded from SCP-1 210 to SCP-2 212. SCP-2 212 may have SCP-1 210, PNF-1 204, and PNF-2 208 as potential next hop entities, and may know their health status based on health probes to those entities published endpoints, or based on piggybacked health details from traffic with those entities. In an example scenario, SCP-2 212 may determine that the original ultimate target destination, PNF-1 204, is overloaded or unavailable, and therefore it may select an alternate PNF-2 208 offering the same service from its next hop list to route the service request. SCP-2 212 may add information to message headers or otherwise provide an indication to CNF-1 202 that future traffic for this service exchange should be sent to PNF-2 208 instead of PNF-1 204. In this example, CNF-1 202 may not know the health conditions of PNF-1 204 or PNF-2 208 since they were not next-hop entities, and instead intermediate entities such as SCP-1 210 or SCP-2 212 may track the health status for ultimate destination producer NFs. An example process flow to manage NF profiles for health check endpoints is depicted in regard to FIG. 2.

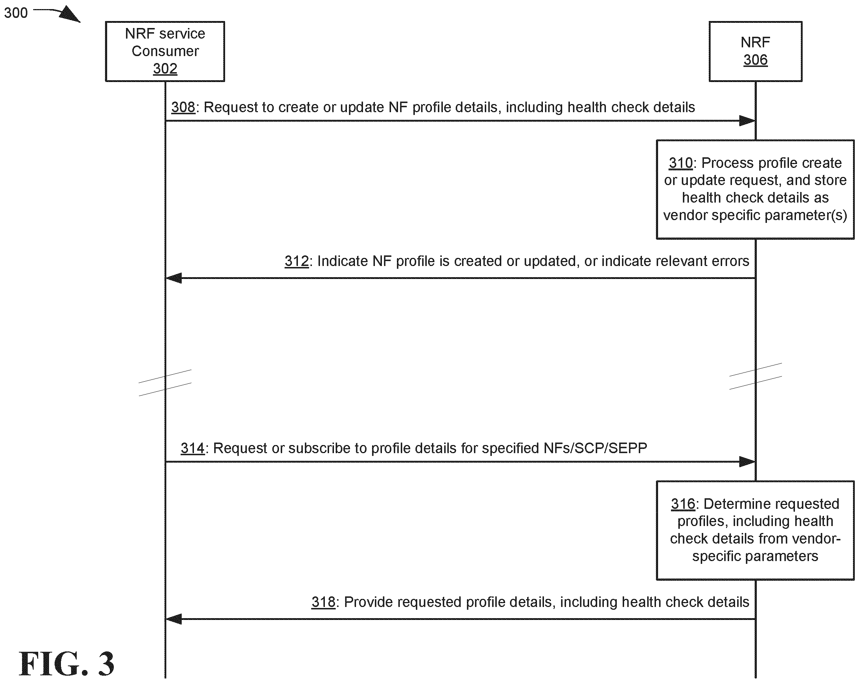

FIG. 3 depicts a flow diagram 300 of an example method of health checks for network functions, in accordance with certain embodiments of the present disclosure. In particular, diagram 300 depicts a communication flow between entities in a 5GC network for creating or accessing NF Profile data for health check endpoints. The entities involved in the process flow may include an NRF service consumer 310, and an NRF 306. An NRF service consumer 310 may include any entity in the network accessing services of the NRF 306, such as consumer NFs 102, producer NFs 104, SEPPs 108, and SCPs 110. NRF 306 services may include creating or updating an NF profile at the NRF, or to access or subscribe to NF profile information for other NFs stored at the NRF. The components in diagram 300 may correspond to elements described in regard to FIG. 1.

At 308, NRF service consumer 302 may request to create or update its NF profile details stored at the NRF 306, including health check details for the NRF service consumer. Health check details may include information such as OCI or LCI information, but may also include custom parameters for the NFProfile generally, or for the NFService details for a service that NF offers, that identifies a health check endpoint and associated details. For example, custom parameters for a health check endpoint may identify a health check port, its relative path or URL (uniform resource locator) address, and suggested timing intervals for performing a health check at the health check port. For example, an NF may only update its health details every thirty seconds, and so performing health checks at a shorter interval may not provide significant improvements in health monitoring, while requiring additional traffic and resources. However, a consumer NF may be free to probe the health endpoint more frequently than the recommended interval. An example request from the NRF service consumer 302 to the NRF 306 to update its NF profile may include an operation such as "PUT .../nf-instances/{nfInstanceID} (NFProfile)".

At 310, the NRF 306 may process the profile create or update request, and may store the health check details as vendor specific parameters of the NF profile. For example, NF profiles under 3GPP specifications may have certain standard or universal parameters or attributes that may be utilized by most or all network operators. In addition, NF profiles may also support vendor specific or customized parameters or attributes, which may enable additional functionality not covered by the 3GPP specifications. The example health check details such as ports and URLs by which health check requests or probes may be performed, recommended health check intervals, and other health check information may be added as custom parameters to general NF profiles or NF service portions of profiles.

At 312, the NRF 306 may send a response to the create or update request 308 to NRF service consumer 302. The response may indicate the requested NF profile was created or updated, or may indicate relevant error codes if the create or update request was not successful. For example, the response 312 may include an HTTP/2 response status code, such as "201 Created (NF Profile)" for a successful resource creation, a 4xx (client error response) or 5xx (server error response) with problem details if the request failed, or a 3xx redirection message as appropriate.

At 314, NRF service consumer 302 (which may be a different consumer 302 than the one that created or updated the NF profile, above) may send a request to NRF 306 to obtain or subscribe to profile details for one or more specified NFs, SCPs, or SEPPs. The specified targets may be identified based on a service the targets provide, unique identifiers, or by other means.

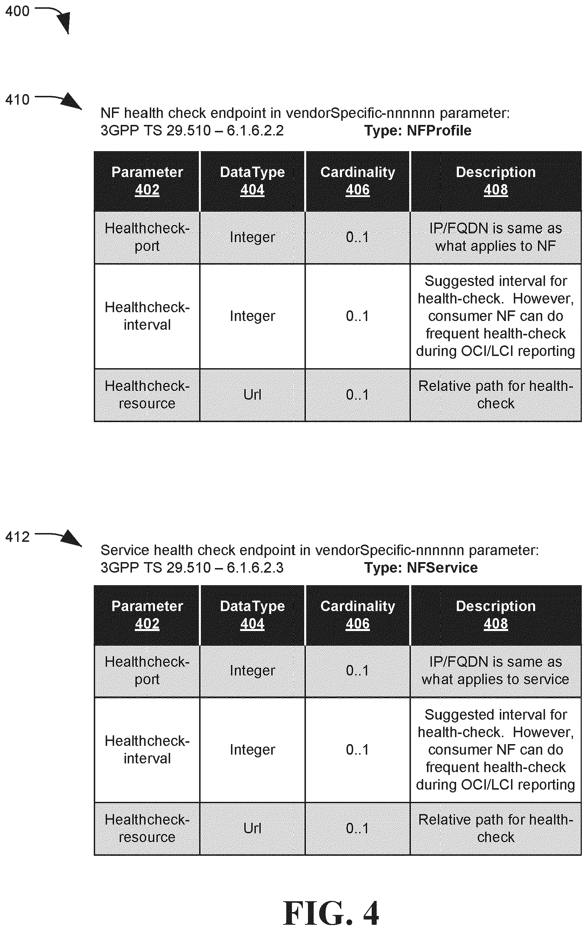

At 316, the NRF 306 may determine the request profile or profiles, including health check details from the vendor-specific parameters for those profiles. The NRF 306 may then provide the request profile details, including the health check details, to the requesting NRF service consumer 302. The profile details may be provided as an immediate response of one or more profiles, or may be provided in the form of subscription updates at a selected interval or in response to changes to the specified target components. In this manner, the NRF service consumer 302 may obtain health check details for components in the network, and may save those details to a local data store. The NRF service consumer 302 may then query or probe the network components using the health check details, and thereby proactively obtain current and relevant health information on those components. The NRF service consumer 302 may use the health information to determine how or where to route service requests, and thereby improve network performance. Example health check profile details are described in regard to FIG. 4.

FIG. 4 depicts a set of profile tables 400 for health checks for network functions, in accordance with certain embodiments of the present disclosure. In particular, tables 400 depict example NF Profile data for health check endpoints. The tables may include a first table 410 for health check details for an NF instance, and a second table 412 for health check details for a service instance of an NF instance. The information of tables 400 may be stored at an NRF for access by NFs, or stored locally at NFs for use in determining how to route service requests, as described in regard to FIGs. 1-3.

The first table 410 may depict details of a vendor specific parameter for defining an NF health check endpoint, for an NFProfile as defined in 3GPP Technical Specification (TS) 29.510, section 6.1.6.2.2. The health check endpoint of NFProfile table 410 may include details on how to perform a health check probe on the corresponding NF generally, as opposed to a health check for a specific service of an NF. The NFProfile table 410 may include fields for a parameter 402, a DataType 404, a cardinality 406, and a description 408.

Parameter 402 may refer to an attribute name or designation for a particular data field, which data field has a corresponding DataType 404, cardinality 406, and description 408. The DataType 404 may identify a type of variable or data object stored in the data field, such as integers, strings, URLs, or other data types. Cardinality 406 may refer to a number of data object values that may be included as part of the parameter, such as from 0..1 (indicating either 0 or 1 values). Description 408 may provide details or explanation for what purpose or use each parameter serves. The example NFProfile table 410 includes three parameters, including Healthcheck-port, Healthcheck-interval, and Healthcheck-resource.

Healthcheck-port may include an integer-type variable identifying a port at which health check probes may be received for the corresponding NF, with a cardinality 406 of 0..1. If no health check details are included for an NF, that NF may still function according to the standard 3GPP specification, but may not support the on-demand proactive health checks as described herein. Healthcheck-port may have a description 408 that the attribute identifies a port, with a corresponding IP (internet protocol) or FQDN (fully qualified domain name) that is the same as what applies to the corresponding NF generally.

Healthcheck-interval may also have an integer DataType 404 with a cardinality 406 of 0..1. The Healthcheck-interval, as explained in the description 408, provides a suggested interval for performing health checks on the corresponding NF. For example, the suggested interval may be set based on how often the NF updates its own health details available via the health check port, or may set an interval intended to reduce load on the NF from health queries. However, a consumer NF can perform health checks at other intervals, including more frequent checks for OCI or LCI reporting.

Healthcheck-resource may have a URL DataType 404 and a cardinality 406 of 0.. 1. As provided in the description 408, Healthcheck-resource may provide a relative network path or address for performing health-checks. The information from healthcheck-port and healthcheck-resource can be used to perform health check probes. As an example, the ultimate address of a health check endpoint may be mailserver.com:8080/health. The FQDN may be "mailserver", which may be the same as what is configured in an NfProfile for FQDN/IP (as alluded in the description 408 of healthcheck-port), which attribute may be part of the standard NF profile attributes and not included as part of the custom parameters show in system 400. The TCP port to which the health check probe will go may be "8080", which may be the attribute value stored to the healthcheck-port parameter. Finally, "/health" may be the healthcheck-resource value, and identify the resource requested with the health check probe.

The second table 412 may depict details of a vendor specific parameter for defining an NF health check endpoint for an NFService as defined in 3GPP Technical Specification (TS) 29.510, section 6.1.6.2.3. The health check endpoint of NFService table 412 may include details on how to perform a health check probe on a corresponding NFService, as opposed to a health check for an NF generally. For example, an NF may provide one or more services, and may have NFService details for each, to which vendor specific custom parameters may be added. The NFService details may be included as a part of an NFProfile for a corresponding NF. Like the NFProfile table 410, the NFService table 412 may include fields for a parameter 402, a DataType 404, a cardinality 406, and a description 408.

The parameters 402 for the NFService table 412 may correspond to the parameters in NFProfile table 410 as described above. However, instead of the Healthcheck-port having an IP/FQDN that is the same as what applies to the NF generally, it may have an IP/FQDN that is same as what applies to the corresponding service of the NFService.

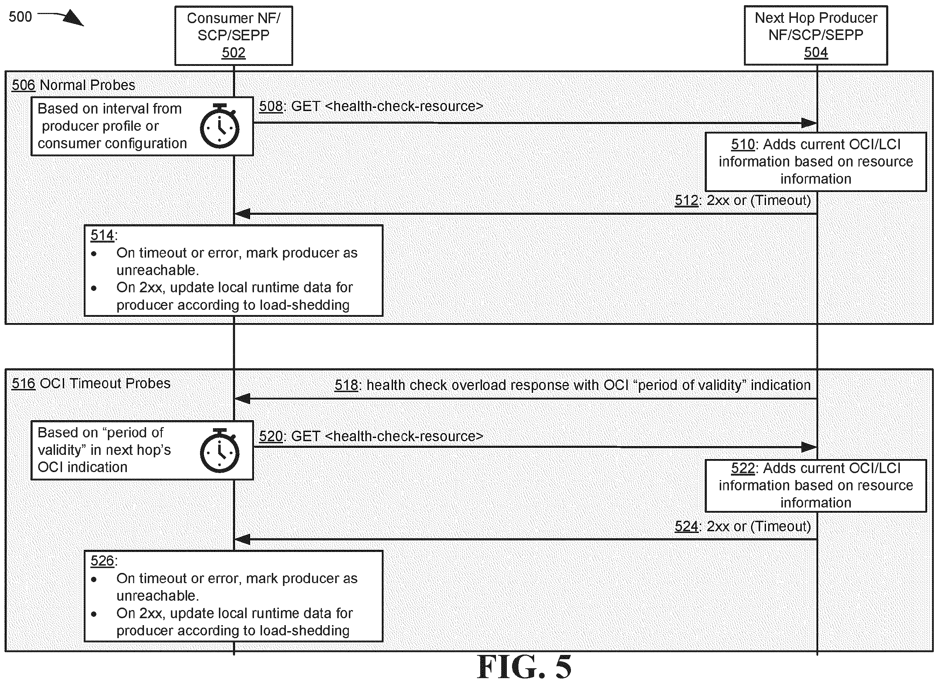

By publishing a separate interface or endpoint for health check reporting in the NF profile, this implementation avoids impacting signaling traffic flow to an NFs normal or service interface(s). Having a separate endpoint defined for health-checks may allow producer NF/SCP/SEPP to separate health-check traffic from signaling requests processing. This may mean a producer NF/SCP/SEPP can have dedicated resources reserved for processing health-check requests, without impacting the flow of signaling traffic. For a health check endpoint, transport level security may remain the same as for other service routing aspects with a producer NF, SCP, or SEPP, and may include establishing a TCP connection. Further, as health-check parameters may be published using vendor-specific attributes, the proposed implementation may have no impact on NRFs or NFs that are not configured to recognize the custom attributes. Existing reporting of OCI/LCI on service request would not be replaced by this feature, and instead the existing 3GPP methods of load reporting would be supplemented by the proactive validation of network health without reliance on established connections and service requests. FIG. 5 provides an example flow diagram for performing periodic health probes to the health check endpoints as described herein.

FIG. 5 depicts a flow diagram 500 of an example method to implement health checks for network functions, in accordance with certain embodiments of the present disclosure. In particular, diagram 500 depicts a communication flow between entities in a 5GC network for performing periodic health check probes. The entities involved in the process flow may include a consumer NF, SCP, or SEPP 502 (generally referred to as a consumer NF 502), and a "next hop" producer NF, SCP, or SEPP 504 (generally referred to as a producer NF 504). The components in diagram 500 may correspond to elements described in regard to FIGs. 1-2.

As described herein, a consumer NF 502 may maintain a local list of producer NFs 504 on which the consumer NF tracks health and network availability conditions, such as load or overload conditions from LCI or OCI reports. One way in which a consumer NF 502 may obtain health data is based on piggybacking the information on an active traffic exchange across an established connection with a producer NF 504. However, for producer NFs 502 with which the consumer NF 502 is not actively exchanging traffic, the consumer NF may obtain the health information based on sending health probes to a health check endpoint of the producer NF 502. When health or load data is received, the consumer NF 502 may update its local list for the corresponding producer NF 504.

Health check probes may be sent at various timing intervals. Whether health check probes are being sent to a producer NF 504, and at what intervals, may change based on various factors. For example, if the consumer NF 502 and producer NF 504 are actively exchanging traffic on which health data is being piggybacked, then health probes may be paused for that producer NF. If OCI information received from a producer NF 504 indicates that the producer NF is in an overload state and designates an overload period of validity, the consumer NF 502 may pause health probes based on the overload state, for example based on when the period of validity expires (e.g., until at the period expiration, or at some set time before or after the period of validity expiration). If the producer NF 504 specifies a recommended health check interval (e.g., in its NF profile information), the consumer NF 502 may set its health check probe intervals based on the recommendation. The consumer NF 502 may also have a default or operator-configured health check interval. Process flow 500 may depict example process flows for normal probes at 506, and probes based on OCI timeout periods at 516.

Regarding a normal probes process flow 506, the consumer NF 502 may send a health check resource request (e.g., as a "GET" request), at 508, based on a timing interval from the producer NF 504 profile, or based on a configuration of the consumer NF 502. At 510, the producer NF 504 may add current OCI, LCI, or both to a service response, based on its own resource information, and may send the response (e.g., as a 2xx response code) along with the health information, at 512. OCI or LCI information may be added to response headers, as defined in 3GPP TS 29.500, sections 5.2.3.2.9 and 5.2.3.2.10. In some examples, a producer NF 504 may periodically calculate and update its own load resource data, which may be retrieved and provided to a consumer NF 502 in response to a health check request. If there was an error processing the request, there may be a timeout or error code instead of a successful response code. For example, the producer NF 504 may have never received the request due to network connection issues, or may have failed to respond or process the request due to load or other issues. At 514, the consumer NF 502 may mark the producer NF 504 as unreachable in response to a timeout or error. The consumer NF 502 may send another health check probe after the producer-defined interval or the consumer-set interval, which may result in the producer NF 504 being updated from an unreachable status based on the response. If, however, a successful response was received at 512, the consumer NF 502 may update the local runtime data for the producer NF 504 according to load shedding settings at 514, for example when OCI/LCI information is provided by producer 504. Load shedding may include prioritizing lower load producers over high-load producers when issuing service requests. In case no OCI/LCI information is provided, producer 504 may be marked as healthy for routing, and consumer NF 502 can route requests to that producer NF based on its route selection algorithm.

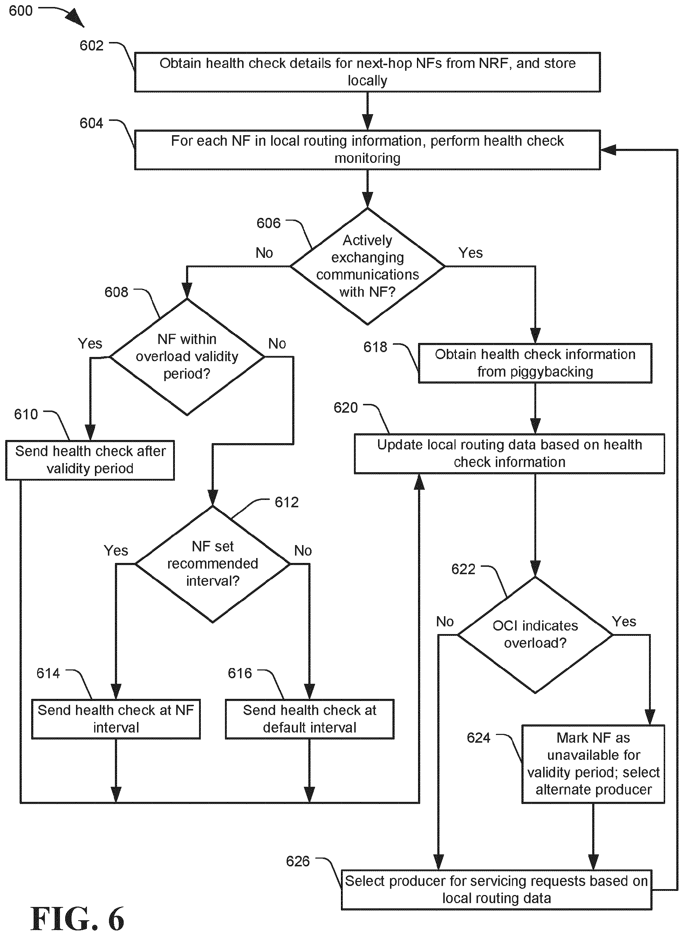

Regarding an OCI timeout probes process flow 516, the consumer NF 502 may receive an indication that producer NF 504 is in an overload state (e.g., based on OCI data), along with an overload period of validity indication, at 518. For example, the OCI data may have been piggybacked on a traffic exchange between consumer NF 502 and producer NF 504, or the consumer NF 502 may have received the OCI data in response to a health check probe. At 520, the consumer NF 502 may send a health check probe after a delay based on the period of validity from the OCI information. At 522, the producer NF 504 may receive and process the request, and send OCI or LCI information back to the consumer NF, at 524. Alternately, the health check probe may timeout, or result in an error response code. At 526, the consumer NF 502 may mark the producer NF 504 as unreachable if there was a timeout or error code, or may update the local runtime data for the producer NF according to load shedding settings. An example flowchart for performing health checks for NFs is described in regard to FIG. 6.

FIG. 6 depicts a flowchart 600 of an example method to implement health checks for network functions, in accordance with certain embodiments of the present disclosure. In particular, flowchart 600 depicts an example process implemented by a consumer NF, SCP, or SEPP (generally referred to as a consumer NF) to perform health probes on one or more producer NFs, SCPs, or SEPPs (generally referred to as producer NFs) in a 5GC network. The method of FIG. 6 may be performed by consumer NF 102, SCP 110, or SEPP 108 of FIG. 1.

At 602, the method may include obtaining health check details for one or more next hop NFs (including SCPs or SEPPs) from an NRF, and storing the details locally at the consumer NF. As discussed herein, health check details may include information about endpoints (such as ports, URL addresses, recommended health check intervals, or the like) of producer NFs by which health check requests or probes may be received and responded to. Next hop NFs may include those NFs to which a consumer NF may directly send traffic, rather than a potential ultimate destination NF that may be several hops away. The health check details may be stored to a local list or database of producer NFs used for routing information, which list may be updated with the actual health status of the listed NFs. For example, the locally stored health check information and status may enable a consumer NF to determine how to route traffic or where to send service requests in order to balance load or avoid network path failures or interruptions.

At 604, for each NF in the local routing information, the method may include performing health check monitoring based on the health check details. By performing health check monitoring, the local NF list can be updated with a current health status of the NFs, enabling more informed routing and service request distribution.

As part of the health check monitoring, the method may include determining whether the consumer NF is actively exchanging communications with a selected NF from the local list, at 606. For example, the consumer NF may be configured to issue health probes or requests to the next hop NFs at a selected timing interval, via a health-check API. However, when there is a signaling message or service request toward a target producer NF before expiry of the health check interval, the consumer NF can suppress the health-check API for that duration for that target NF, until a next timeout period. This may avoid adding additional traffic to the network and to the next hop producer NF for processing.

When there is not active communications with the target NF, at 606, the method may include determining whether the target NF is within an overload validity period, at 608. When a producer NF provides OCI that indicates the producer is in an overload state, the OCI may include an "Overload Control Period of Validity". The period of validity may indicate when the overload state may be ended, and may be a way to limit receiving additional load from health requests when the NF is already overloaded.

If the target NF is still within the overload validity period, at 608, the method may include sending a health check or probe after the validity period has expired, at 610. As the overload period of validity may be a fixed number or an estimate of the duration of the overload state, it may be inaccurate as to how long the target NF will be overloaded. Accordingly, the consumer NF may instead choose or be configured to send the health probe before the period of validity has expired, in case the overload status ended early. Alternately, the health probe may be sent some selected period after the validity period, to increase the likelihood that the overload state has ended. The consumer NF may be configured to perform health checks in any manner or with any timing responsive to the overload period of validity.

If, instead, the target NF is not within the overload validity period, at 608, the method may include determining whether the target NF provided a recommended health check interval period, at 612. For example, an NF may include a recommended health check interval as part of its NF profile, in addition to providing health check endpoint details. The consumer NF may utilize the recommended health check interval from the producer NF when setting how often the consumer issues health checks to that producer. The consumer NF need not apply the recommended period exactly, and can issue health checks at a shorter or longer interval than recommended, or ignore the recommended interval entirely.

In the current example, when there was a recommended interval set by the producer NF, at 612, the method may include sending the health check at the specified target NF interval, at 614. However, if there was no interval set, at 612, the method may include sending the health check at a default or operator-configured interval of the consumer NF, at 616.

Returning now to an example determination that the consumer NF is actively exchanging communications with the target NF, at 606, the method may include obtaining health details from the target via piggybacking on the exchanged traffic, at 618. For example, the target NF may provide OCI or LCI information along with message responses, without the need for the consumer NF to send health check probes to a health check endpoint.

Once health check information has been obtained (or in some examples, a timeout or error message are received indicating the health check failed) at 610, 614, 616, or 618, the method may include updating the local routing data based on the received health check information, at 620. Based on the received health check information, a determination may be made whether the received OCI indicates that the target NF is in an overload state, at 622. If the target is in an overload state, the method may include marking the NF as unavailable for the validity period received with the OCI, and if in active communication with the target NF, selecting an alternate producer NF, at 624. In some examples, selecting an alternate NF may be performed at a later time, such as prior to issuing a next signaling or service message.

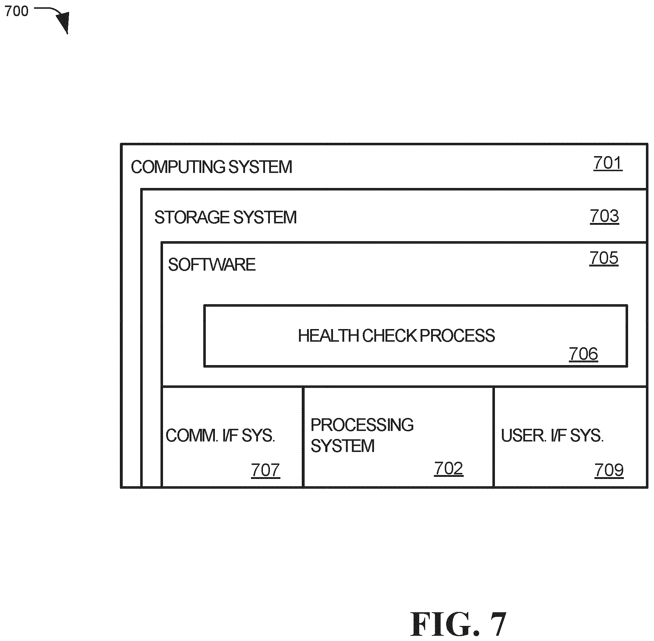

If the OCI does not indicate overload, at 622, or after the target NF is marked as unavailable for the validity period, at 624, the method may include selecting a producer for servicing requests based on the updated local routing and health data, at 626. For example, the consumer NF may select producers to receive future requests based on load level or network connection details, for the purposes of load balancing or avoiding failed connections. Other factors may be considered as well, such as preferred producers may be selected even if they have a higher load level than backup producers, for example based on geographic preference or reliability. The method may continue performing health check monitoring, at 604, for example based on one or more selected time intervals. A computing system configured to perform the operations and methods described herein is provided in regard to FIG. 7.

FIG. 7 is a diagram of a system 700 configured to implement health checks for network functions, in accordance with certain embodiments of the present disclosure. System 700 may be an example of an apparatus including a computing system 701 that is representative of any system or collection of systems in which the various processes, systems, programs, services, and scenarios disclosed herein may be implemented. For example, computing system 701 may be an example consumer NF 102, producer NF 104, NRF 106, SEPP 108, or SCP 110 as depicted in system 100 of FIG. 1. Examples of computing system 701 include, but are not limited to, server computers, desktop computers, laptop computers, routers, switches, web servers, cloud computing platforms, and data center equipment, as well as any other type of physical or virtual server machine, physical or virtual router, container, and any variation or combination thereof.

Computing system 701 may be implemented as a single apparatus, system, or device or may be implemented in a distributed manner as multiple apparatuses, systems, or devices. Computing system 701 may include, but is not limited to, processing system 702, storage system 703, software 705, communication interface system 707, and user interface system 709. Processing system 702 may be operatively coupled with storage system 703, communication interface system 707, and user interface system 709.

Processing system 702 may load and execute software 705 from storage system 703. Software 705 may include health check process 706, which may be representative of any of the operations for publishing or registering a health check endpoint or port, and monitoring health and load status of other NFs in a network, as discussed with respect to the preceding figures. When executed by processing system 702, software 705 may direct processing system 702 to operate as described herein for at least the various processes, operational scenarios, and sequences discussed in the foregoing implementations. Computing system 701 may optionally include additional devices, features, or functionality not discussed for purposes of brevity.

In some embodiments, processing system 702 may comprise a micro-processor and other circuitry that retrieves and executes software 705 from storage system 703. Processing system 702 may be implemented within a single processing device but may also be distributed across multiple processing devices or sub-systems that cooperate in executing program instructions. Examples of processing system 702 may include general purpose central processing units, graphical processing units, application specific processors, and logic devices, as well as any other type of processing device, combinations, or variations thereof.

Storage system 703 may comprise any memory device or computer readable storage media readable by processing system 702 and capable of storing software 705. Storage system 703 may include volatile and nonvolatile, removable and non-removable media implemented in any method or technology for storage of information, such as computer readable instructions, data structures, program modules, or other data. Examples of storage media include random access memory, read only memory, magnetic disks, optical disks, optical media, flash memory, virtual memory and non-virtual memory, magnetic cassettes, magnetic tape, magnetic disk storage or other magnetic storage devices, or any other suitable storage media. In no case is the computer readable storage media a propagated signal.

In addition to computer readable storage media, in some implementations storage system 703 may also include computer readable communication media over which at least some of software 705 may be communicated internally or externally. Storage system 703 may be implemented as a single storage device but may also be implemented across multiple storage devices or sub-systems co-located or distributed relative to each other. Storage system 703 may comprise additional elements, such as a controller, capable of communicating with processing system 702 or possibly other systems.

Software 705 (including health check process 706 among other functions) may be implemented in program instructions that may, when executed by processing system 702, direct processing system 702 to operate as described with respect to the various operational scenarios, sequences, and processes illustrated herein.

In particular, the program instructions may include various components or modules that cooperate or otherwise interact to carry out the various processes and operational scenarios described herein. The various components or modules may be embodied in compiled or interpreted instructions, or in some other variation or combination of instructions. The various components or modules may be executed in a synchronous or asynchronous manner, serially or in parallel, in a single threaded environment or multi-threaded, or in accordance with any other suitable execution paradigm, variation, or combination thereof. Software 705 may include additional processes, programs, or components, such as operating system software, virtualization software, or other application software. Software 705 may also comprise firmware or some other form of machine-readable processing instructions executable by processing system 702.

In general, software 705 may, when loaded into processing system 702 and executed, transform a suitable apparatus, system, or device (of which computing system 701 is representative) overall from a general-purpose computing system into a special-purpose computing system as described herein. Indeed, encoding software 705 on storage system 703 may transform the physical structure of storage system 703. The specific transformation of the physical structure may depend on various factors in different implementations of this description. Examples of such factors may include, but are not limited to, the technology used to implement the storage media of storage system 703 and whether the computer-storage media are characterized as primary or secondary storage, as well as other factors.

For example, if the computer readable storage media are implemented as semiconductor-based memory, software 705 may transform the physical state of the semiconductor memory when the program instructions are encoded therein, such as by transforming the state of transistors, capacitors, or other discrete circuit elements constituting the semiconductor memory. A similar transformation may occur with respect to magnetic or optical media. Other transformations of physical media are possible without departing from the scope of the present description, with the foregoing examples provided only to facilitate the present discussion.

Communication interface system 707 may include communication connections and devices that allow for communication with other computing systems (not shown) over communication networks (not shown). Examples of connections and devices that together allow for inter-system communication may include network interface cards, antennas, power amplifiers, radio-frequency (RF) circuitry, transceivers, and other communication circuitry. The connections and devices may communicate over communication media to exchange communications with other computing systems or networks of systems, such as metal, glass, air, or any other suitable communication media.

Communication between computing system 701 and other computing systems (not shown), may occur over a communication network or networks and in accordance with various communication protocols, combinations of protocols, or variations thereof. Examples include intranets, internets, the Internet, local area networks, wide area networks, wireless networks, wired networks, virtual networks, software defined networks, data center buses and backplanes, or any other type of network, combination of network, or variation thereof.

As will be appreciated by one skilled in the art, aspects of the present invention may be embodied as a system, method, computer program product, and other configurable systems. Accordingly, aspects of the present invention may take the form of an entirely hardware embodiment, an entirely software embodiment (including firmware, resident software, microcode, etc.) or an embodiment combining software and hardware aspects that may all generally be referred to herein as a "circuit," "module" or "system." Furthermore, aspects of the present invention may take the form of a computer program product embodied in one or more memory devices or computer readable medium(s) having computer readable program code embodied thereon.

Unless the context clearly requires otherwise, throughout the description and the claims, the words "comprise," "comprising," and the like are to be construed in an inclusive sense, as opposed to an exclusive or exhaustive sense; that is to say, in the sense of "including, but not limited to." As used herein, the terms "connected," "coupled," or any variant thereof means any connection or coupling, either direct or indirect, between two or more elements; the coupling or connection between the elements can be physical, logical, or a combination thereof. Additionally, the words "herein," "above," "below," and words of similar import, when used in this application, refer to this application as a whole and not to any particular portions of this application. Where the context permits, words in the above Detailed Description using the singular or plural number may also include the plural or singular number respectively. The word "or," in reference to a list of two or more items, covers all the following interpretations of the word: any of the items in the list, all the items in the list, and any combination of the items in the list.

The phrases "in some embodiments," "according to some embodiments," "in the embodiments shown," "in other embodiments," and the like generally mean the particular feature, structure, or characteristic following the phrase is included in at least one implementation of the present technology, and may be included in more than one implementation. In addition, such phrases do not necessarily refer to the same embodiments or different embodiments.

The above Detailed Description of examples of the technology is not intended to be exhaustive or to limit the technology to the precise form disclosed above. While specific examples for the technology are described above for illustrative purposes, various equivalent modifications are possible within the scope of the technology, as those skilled in the relevant art will recognize. For example, while processes or blocks are presented in a given order, alternative implementations may perform routines having steps, or employ systems having blocks, in a different order, and some processes or blocks may be deleted, moved, added, subdivided, combined, and/or modified to provide alternative or sub combinations. Each of these processes or blocks may be implemented in a variety of different ways. Also, while processes or blocks are at times shown as being performed in series, these processes or blocks may instead be performed or implemented in parallel, or may be performed at different times. Further any specific numbers noted herein are only examples: alternative implementations may employ differing values or ranges.

The teachings of the technology provided herein can be applied to other systems, not necessarily the system described above. The elements and acts of the various examples described above can be combined to provide further implementations of the technology. Some alternative implementations of the technology may include not only additional elements to those implementations noted above, but also may include fewer elements.

These and other changes can be made to the technology in light of the above Detailed Description. While the above description describes certain examples of the technology, and describes the best mode contemplated, no matter how detailed the above appears in text, the technology can be practiced in many ways. Details of the system may vary considerably in its specific implementation, while still being encompassed by the technology disclosed herein. As noted above, particular terminology used when describing certain features or aspects of the technology should not be taken to imply that the terminology is being redefined herein to be restricted to any specific characteristics, features, or aspects of the technology with which that terminology is associated. In general, the terms used in the following claims should not be construed to limit the technology to the specific examples disclosed in the specification, unless the above Detailed Description section explicitly defines such terms. Accordingly, the actual scope of the technology encompasses not only the disclosed examples, but also all equivalent ways of practicing or implementing the technology under the claims.

Aspects of the subject matter described herein are set out in the following numbered clauses:
1. A network function, NF, health monitoring system, comprising:
   one or more processors; and
   a memory having stored thereon instructions that, upon execution by the one or more processors,
   cause the one or more processors to:
      obtain health check details for a producer NF, the health check details including a health check endpoint configured to receive health check probes;
      send a health check probe to the health check endpoint requesting a health status of the producer NF,
      update the health status of the producer NF in a locally stored list of producer NFs based on a response to the health check probe; and
      select a target producer NF to send traffic to based on the health status of the locally stored list of producer NFs.
2. The NF health monitoring system of clause 1, wherein the instructions, upon execution by the one or more processors, further cause the one or more processors to:
   request NF profile data for the producer NF from a network repository function, NRF; and
   obtain the health check details from the NF profile data.
3. The NF health monitoring system of clause 2, further comprising:
   the health check details are included as vendor specific attributes added to the NF profile data.
4. The NF health monitoring system of clause 3, further comprising:
   the health check details are included in an NFService section of the NF profile for a service-specific health check endpoint.
5. The NF health monitoring system of clause 4, further comprising:
   the health status includes a load level of the producer NF.
6. The NF health monitoring system of clause 5, wherein the instructions, upon execution by the one or more processors, further cause the one or more processors to:
   send the health check probe at a selected timing interval.
7. The NF health monitoring system of clause 6, further comprising:
   the health check details include a recommended health check interval for a timing delay between health check probes sent to the health check endpoint; and
   wherein the instructions, upon execution by the one or more processors, further cause the one or more processors to adjust the selected timing interval based on the recommended health check interval.
8. The NF health monitoring system of clause 7, wherein the instructions, upon execution by the one or more processors, further cause the one or more processors to:
   determine whether active signaling traffic is being exchanged with the producer NF, via which the health status of the producer NF is piggybacked onto the active signaling traffic; and
   suspend the health check probe to the producer NF when the active signaling traffic is being exchanged.
9. The NF health monitoring system of clause 8, wherein the instructions, upon execution by the one or more processors, further cause the one or more processors to:
   receive overload control information, OCI, as part of the health status of the producer NF, the OCI including:
   an indication the producer NF is overloaded;
   an overload control period of validity during which the producer NF is presumed to be overloaded; and
   suspend the health check probe to the producer NF based on the overload control period of validity.
10. The NF health monitoring system of clause 9, wherein the instructions, upon execution by the one or more processors, further cause the one or more processors to:
   create a new NF profile, at the NRF, for a consumer NF implementing the NF health monitoring system, the new NF profile including a new health check endpoint for the consumer NF.
11. A method comprising:
   operating network function, NF, health monitoring system, including:
   obtaining health check details for a producer NF, the health check details including a health check endpoint configured to receive health check probes;
   sending a health check probe to the health check endpoint requesting a health status of the producer NF;
   updating the health status of the producer NF in a locally stored list of producer NFs based on a response to the health check probe; and
   selecting a target producer NF to send traffic to based on the health status of the locally stored list of producer NFs.
12. The method of clause 11, further comprising:
   requesting NF profile data for the producer NF from a network repository function (NRF); and
   obtaining the health check details from the NF profile data.
13. The method clause 12, further comprising:
   the health check details are included as vendor specific attributes added to the NF profile data.
14. The method of clause 12, further comprising:
   the health check details are included in an NFService section of the NF profile for a service-specific health check endpoint.
15. The method of clause 12, further comprising:
   creating a new NF profile, at the NRF, for a consumer NF implementing the NF health monitoring system, the new NF profile including a new health check endpoint for the consumer NF.
16. The method of clause 11, further comprising:
   the health status includes a load level of the producer NF.
17. The method of clause 11, further comprising:
   sending the health check probe at a selected timing interval.
18. The method of clause 17, further comprising:
   the health check details include a recommended health check interval for a timing delay between health check probes sent to the health check endpoint; and
   adjusting the selected timing interval based on the recommended health check interval.
19. The method of clause 11, further comprising:
   determining whether active signaling traffic is being exchanged with the producer NF, via which the health status of the producer NF is piggybacked onto the active signaling traffic; and
   suspending the health check probe to the producer NF when the active signaling traffic is being exchanged.
20. The method of clause 11, further comprising:
   receiving overload control information, OCI, as part of the health status of the producer NF, the OCI including:
   an indication the producer NF is overloaded;
   an overload control period of validity during which the producer NF is presumed to be overloaded; and
   suspending the health check probe to the producer NF based on the overload control period of validity.

To reduce the number of claims, certain aspects of the technology are presented below in certain claim forms, but the applicant contemplates the various aspects of the technology in any number of claim forms. For example, while only one aspect of the technology is recited as a computer-readable medium claim, other aspects may likewise be embodied as a computer-readable medium claim, or in other forms, such as being embodied in a means-plus-function claim. Any claims intended to be treated under 35 U.S.C. § 112(f) will begin with the words "means for" but use of the term "for" in any other context is not intended to invoke treatment under 35 U.S.C. § 112(f). Accordingly, the applicant reserves the right to pursue additional claims after filing this application to pursue such additional claim forms, in either this application or in a continuing application.

## Claims

1. A network function, NF, health monitoring system, comprising:
one or more processors; and
a memory having stored thereon instructions that, upon execution by the one or more processors, cause the one or more processors to:
obtain health check details for a producer NF, the health check details including a health check endpoint configured to receive health check probes;
send a health check probe to the health check endpoint requesting a health status of the producer NF;
update the health status of the producer NF in a locally stored list of producer NFs based on a response to the health check probe; and
select a target producer NF to send traffic to based on the health status of the locally stored list of producer NFs.

2. The NF health monitoring system of claim 1, wherein the instructions, upon execution by the one or more processors, further cause the one or more processors to:
request NF profile data for the producer NF from a network repository function, NRF; and
obtain the health check details from the NF profile data.

3. The NF health monitoring system of claim 2, further comprising:
the health check details are included as vendor specific attributes added to the NF profile data.

4. The NF health monitoring system of claim 3, further comprising:
the health check details are included in an NFService section of the NF profile for a service-specific health check endpoint.

5. The NF health monitoring system of claim 4, further comprising:
the health status includes a load level of the producer NF.

6. The NF health monitoring system of claim 5, wherein the instructions, upon execution by the one or more processors, further cause the one or more processors to:
send the health check probe at a selected timing interval.

7. The NF health monitoring system of claim 6, further comprising:
the health check details include a recommended health check interval for a timing delay between health check probes sent to the health check endpoint; and
wherein the instructions, upon execution by the one or more processors, further cause the one or more processors to adjust the selected timing interval based on the recommended health check interval.

8. The NF health monitoring system of claim 7, wherein the instructions, upon execution by the one or more processors, further cause the one or more processors to:
determine whether active signaling traffic is being exchanged with the producer NF, via which the health status of the producer NF is piggybacked onto the active signaling traffic; and
suspend the health check probe to the producer NF when the active signaling traffic is being exchanged.

9. The NF health monitoring system of claim 8, wherein the instructions, upon execution by the one or more processors, further cause the one or more processors to:
receive overload control information, OCI, as part of the health status of the producer NF, the OCI including:
an indication the producer NF is overloaded;
an overload control period of validity during which the producer NF is presumed to be overloaded; and
suspend the health check probe to the producer NF based on the overload control period of validity.

10. The NF health monitoring system of claim 9, wherein the instructions, upon execution by the one or more processors, further cause the one or more processors to:
create a new NF profile, at the NRF, for a consumer NF implementing the NF health monitoring system, the new NF profile including a new health check endpoint for the consumer NF.

11. A method comprising:
operating network function, NF, health monitoring system, including:
obtaining health check details for a producer NF, the health check details including a health check endpoint configured to receive health check probes;
sending a health check probe to the health check endpoint requesting a health status of the producer NF;
updating the health status of the producer NF in a locally stored list of producer NFs based on a response to the health check probe; and
selecting a target producer NF to send traffic to based on the health status of the locally stored list of producer NFs.

12. A computer readable storage medium comprising instructions that, when executed, cause a processor to perform the method of claim 11.
